# EUROPÄISCHE PATENTANMELDUNG

(11) **EP 4 466 987 A2**
(43) Veröffentlichungstag der Anmeldung: **27.11.2024**
(21) Anmeldenummer: 24172411.1
(22) Anmeldetag: 25.04.2024
(51) Int. Cl.: A01K 1/00

(54) **FREIBELÜFTETES GEBÄUDE**

(30) Priorität: 22.05.2023 DE 102023113294
(71) Anmelder: Huesker Synthetic GmbH, 48712 Gescher (DE)
(72) Erfinder: Schleusener, Christof, 48366 Laer (DE)
(74) Vertreter: Pelster Behrends Patentanwälte PartG mbB

(57) **Zusammenfassung**

Die Erfindung betrifft ein freibelüftetes Gebäude (10), insbesondere einen frei belüfteten landwirtschaftlichen Tierstall, mit einem Gebäudebelüftungssystem (12) zum Belüften des freibelüfteten Gebäudes (10).

## Beschreibung

Die Erfindung betrifft ein freibelüftetes Gebäude nach dem Oberbegriff des Patentanspruchs 1. Weiterhin betrifft die Erfindung ein Verfahren zum Betreiben eines frei belüfteten Gebäudes nach dem Oberbegriff des Patentanspruchs 13. Ferner betrifft die Erfindung ein Verfahren zum Bestimmen eines Installationsortes für eine Luftreinigungseinrichtung gemäß Patentanspruch 17 und ein Verfahren zum Erzeugen einer digitalen Repräsentanz eines frei belüfteten Gebäudes gemäß Patentanspruch 18.

Bei der Nutztierhaltung ist es erforderlich, dass zum Wohlbefinden der Nutztiere innerhalb des Tierstalls ein artgerechtes Gebäudeklima herrscht. In der Praxis werden Nutztiere daher häufig in freibelüfteten Tierställen gehalten. In frei belüfteten Tierställen erfolgt die Stallklimatisierung durch einen Luftaustausch der Abluft des Stalls mit Frischluft aus der Gebäudeumgebung überwiegend durch natürliche Luftbewegungen. Diese natürliche Belüftung des Tierstalls sorgt für natürliche und artgerechte Klimabedingungen innerhalb des Tierstalls, wodurch folglich eine artgerechte Tierhaltung sichergestellt ist.

Allerdings reichert sich die Stallluft durch die Nutztierhaltung mit hohen Konzentrationen von Schadstoffen und/oder Schadgasen, beispielsweise Staubpartikel und Ammoniak, an. Durch den natürlichen Luftaustausch des frei belüfteten Tierstalls gelangt diese mit den Schadstoffen und/oder Schadgasen angereicherte Abluft aus dem Tierstall in die Umgebung des Tierstalls.

In der Folge steigt die Konzentration an unterschiedlichen Schadstoffen und/oder Schadgasen in der Umgebungsluft im Bereich des Tierstalls an und vorgegebene Grenzwerte für Schadstoff- und/oder Schadgaskonzentrationen in der Umgebung des Tierstalls können überschritten werden. Dieser Umstand hat insbesondere auf den Umwelt- und Klimaschutz negative Auswirkungen, da Schadstoffe, wie beispielsweise Feinstaub, die Luft verunreinigen und Schadgase, wie beispielsweise CO2 und Methan den Treibhauseffekt und somit die Erderwärmung verstärken. Zudem können Schadgase, wie beispielsweise Ammoniak, eine Geruchsbelästigung umliegend ansässiger Anwohner verursachen. Hohe Konzentrationen des Schadgases Schwefelwasserstoff stellen sogar eine Gesundheitsgefahr für Mensch und Tier dar.

Da eine Reinigung der Abluft von frei belüfteten Gebäuden, wie frei belüfteten Tierställen, aus dem Stand der Technik bisher nicht bekannt ist und außerdem davon auszugehen ist, dass sich freibelüftete Tierställe in Zukunft durch steigende Anforderungen an den Tierschutz weiter gegen zwangsbelüftete Tierställe durchsetzen werden, wird eine Lösung für die Problematik des Schadstoff- und/oder Schadgasausstoßes von freibelüfteten Tierställen weiter an Bedeutung gewinnen.

Dabei können die aus dem Bereich von zwangsbelüfteten Tierställen bekannten herkömmlichen Anlagen zur Luftwäsche bauartbedingt nicht an frei belüfteten Gebäuden eingesetzt werden, da diese nur dazu geeignet sind, aktiv geförderte und gezielt geleitete Luft zu reinigen. Zum Reinigen von nicht geführter und durch natürliche Luftbewegungen frei und passiv aus dem Gebäude ausströmender Luft sind diese Luftwäscher folglich ungeeignet. Hinzu kommt, dass die bekannten Luftwäscher für zwangsbelüftete Ställe aufgrund ihres zumeist mehrstufigen Aufbaus einen hohen Platzbedarf aufweisen und einen großen baulichen Aufwand sowie hohe Investitionskosten nach sich ziehen.

Die der Erfindung zugrundeliegende Aufgabe besteht somit darin, den Schadstoff- und Schadgasausstoß eines freibelüfteten Gebäudes, insbesondere eines frei belüfteten Tierstalls, zumindest zu verringern.

Die Aufgabe wird gelöst mit einem freibelüfteten Gebäude der eingangs genannten Art, wobei das freibelüftete Gebäude eine Luftreinigungseinrichtung zum Abscheiden von Partikeln und/oder Schadgasen aus Luft umfasst.

Durch eine Luftreinigungseinrichtung wird es ermöglicht, Schadstoffe und/oder Schadgase aus der Abluft eines Tierstalls abzuscheiden, sodass die Schadstoff- und/oder Schadgaskonzentration in der Abluft zumindest reduziert werden kann. Auf diese Weise kann vermieden werden, dass klimaschädliche Gase, wie Methan, giftige Gase, wie Schwefelwasserstoff und luftverschmutzende Partikel in die Umgebung des Tierstalls gelangen, sodass Grenzwerte für die Schadstoff- und/oder Schadgaskonzentration eingehalten und Gefährdungen der Umwelt und von Tieren und Menschen im Nahbereich des Tierstalls verhindert werden können. Auch Geruchsbelästigungen durch übelriechende Gase, wie Ammoniak, können so effektiv abgewendet werden. Ferner erfordert eine erfindungsgemäße Luftreinigungseinrichtung Kosten gegenüber den aus zwangsbelüfteten Ställen bekannten Luftwäschern weniger Platz, Bauaufwand und Kosten.

Die Luftreinigungseinrichtung ist vorzugsweise Bestandteil des Gebäudebelüftungssystems. Die Luftreinigungseinrichtung ist vorzugsweise dazu eingerichtet, Partikel und/oder Schadgase aus der Luft im freibelüfteten Gebäude und/oder aus der aus dem Gebäude ausströmenden und/oder aus der in das Gebäude einströmenden Luft abzuscheiden, sodass die Schadstoffkonzentration und/oder die Schadgaskonzentration in der Luft begrenzbar und/oder regulierbar ist. Insbesondere kann die Luftreinigungseinrichtung dazu eingerichtet sein, Schadstoffe wie Staubpartikel und/oder Schadgase wie Ammoniak, Kohlenstoffdioxid, Methan, Schwefelwasserstoff und/oder Lachgas. Die Schadgase können organische und/oder anorganische Gase, Dämpfe und/oder Gasgemische sein. Insbesondere kann mittels der Luftreinigungseinrichtung die aus dem freibelüfteten Gebäude in die Umgebung ausströmende Luft gereinigt werden. Dadurch, dass die in die Umgebung des Gebäudes strömende Luft gereinigt wird, können Schadstoff- und Schadgas-Grenzwerte zum Schutz der Umwelt und der in der Umgebung wohnenden Menschen eingehalten und Geruchsbelästigungen in der Umgebung des Gebäudes vermieden werden.

In einer bevorzugten Ausführungsform des erfindungsgemäßen freibelüfteten Gebäudes umfasst die Luftreinigungseinrichtung zum Abscheiden von Partikeln und/oder Schadgasen aus der Luft zumindest einen Elektroabscheider. Vorzugsweise ist der zumindest eine Elektroabscheider, auch Elektrofilter oder elektrostatischer Filter genannt, dazu eingerichtet, Partikel, beispielsweise Staub, aus Gasen, insbesondere aus der Luft, abzuscheiden. Vorzugsweise ist mittels des Elektroabscheiders eine elektrische Gasreinigung der Luft ausführbar. Der Elektroabscheider macht sich beim Abscheiden von Partikeln aus der Luft das elektrostatische Prinzip zunutze, indem Luft durch ein elektrisches Feld strömt, in welchem die Partikel in der Luft aufgeladen werden, sodass sie anschließend an einer Elektrode anhaften. Die Luftreinigungseinrichtung kann mehrere in Strömungsrichtung der Luft hintereinander angeordnete Elektroabscheider umfassen.

In einer anderen bevorzugten Ausführungsform des erfindungsgemäßen frei belüfteten Gebäudes umfasst die Luftreinigungseinrichtung zum Abscheiden von Partikeln und/oder Schadgasen aus der Luft zumindest einen Filter. Der zumindest eine Filter kann als Partikelfilter oder als Gasfilter oder als Kombinationsfilter zum Filtern von Partikeln und Gasen ausgebildet sein. Insbesondere kann der Filter als Aktivkohlefilter ausgebildet sein oder zumindest Aktivkohle zum Abscheiden von Schadgasen und/oder Schaddämpfen umfassen. Aktivkohle ist durch eine sehr große innere Oberfläche dazu in der Lage, Schadgase und/oder Schaddämpfe aus der Luft zu absorbieren. Zudem kann der Filter als Schwebstofffilter, insbesondere als HEPA-Filter, zum Filtern von Feinstaub und/oder feiner Schwebstoffe, wie Aerosole, Bakterien und/oder Pollen ausgebildet sein. Der Filter kann mehrschichtig und/oder mehrstufig ausgebildet sein. Der Filter kann eine oder mehrere Filtermedien und/oder eine oder mehrere Filterschichten, beispielsweise aus Papier, Vliesstoff und/oder Aktivkohle umfassen. Vorzugsweise ist die Luftreinigungseinrichtung dazu eingerichtet, Luft in einem mehrstufigen Abscheidungsprozess zu reinigen, wobei die Luftreinigungseinrichtung für den mehrstufigen Abscheidungsprozess zumindest einen Elektroabscheider zum Abscheiden von Partikeln und zumindest einen Filter zum Abscheiden von Schadgasen umfasst. Luftreinigungseinrichtung kann außerdem einen Vorfilter zur Abscheidung grober Partikel, wie Erde und Sand, umfassen.

In einer weiteren bevorzugten Ausführungsform des erfindungsgemäßen frei belüfteten Gebäudes weist das Gebäudebelüftungssystem zumindest eine Belüftungseinrichtung auf, durch welche Luft in das Gebäude einströmbar und/oder aus dem Gebäude ausströmbar ist, wobei die zumindest eine Luftreinigungseinrichtung derart angeordnet ist, dass Partikel und/oder Schadgase mittels der Luftreinigungseinrichtung aus der durch die Belüftungseinrichtung einströmende und/oder ausströmende Luft abscheidbar sind. Vorzugsweise strömt die Luft passiv durch natürliche Luftbewegung durch die Belüftungseinrichtung in das Gebäude hinein und/oder aus dem Gebäude hinaus. Die Belüftungseinrichtung kann zudem zumindest eine aktive Luftfördereinrichtung, beispielsweise einen Ventilator, zur Unterstützung der natürlichen Luftbewegung und/oder zur gezielten Erhöhung der Strömungsgeschwindigkeit der Luft und/oder zum Herbeiführen eines aktiv erzeugten Luftstroms umfassen. Die Luftreinigungseinrichtung ist vorzugsweise derart an der Belüftungseinrichtung angeordnet, dass die durch die Belüftungseinrichtung strömende Luft teilweise oder vollständig durch die Luftreinigungseinrichtung strömt. Die Belüftungseinrichtung kann als Seitenlüftungsvorrichtung, insbesondere als Wickellüftung, ausgebildet sein. Die Belüftungseinrichtung kann zudem als Gebäudeöffnung ausgebildet sein. Zum Regulieren der Belüftung des Gebäudes können die Seitenlüftungsvorrichtungen und/oder Gebäudeöffnungen vorzugsweise zumindest teilweise geöffnet und geschlossen werden. Das Gebäudebelüftungssystem kann zudem zumindest einen Windschutz, insbesondere zumindest ein Gitter und/oder zumindest ein Netz, zum Schutz des Gebäudeinneren vor Sturmschäden umfassen, wobei die Luftfördereinrichtung an dem zumindest einen Windschutz angeordnet sein kann.

Es ist zudem ein erfindungsgemäßes frei belüftetes Gebäude vorteilhaft, bei welchem das Gebäudebelüftungssystem mehrere Belüftungseinrichtungen umfasst, wobei an einer, mehreren oder sämtlichen Belüftungseinrichtungen jeweils zumindest eine Luftreinigungseinrichtung zum Abscheiden von Partikeln und/oder Schadgasen aus der Luft angeordnet ist und/oder wobei einer, mehreren oder sämtlichen Belüftungseinrichtungen jeweils zumindest eine Luftreinigungseinrichtung zum Abscheiden von Partikeln und/oder Schadgasen aus der Luft zugeordnet ist. Durch mehrere Belüftungseinrichtungen und jeweils zumindest einer Luftreinigungseinrichtung an jeder Belüftungseinrichtung können Schadstoff- und Schadgasemissionen des Gebäudes minimiert werden.

Vorzugsweise werden mittels der Luftreinigungseinrichtungen Schadstoffe und/oder Schadgase aus der Luft abgeschieden, welche durch die Belüftungsvorrichtung strömt, an welcher die jeweilige Luftreinigungseinrichtung angeordnet ist.

Weiterhin ist ein erfindungsgemäßes freibelüftetes Gebäude bevorzugt, welches zumindest eine Luftleitvorrichtung zum Leiten von Luft zu der zumindest einen Luftreinigungseinrichtung umfasst. Die zumindest eine Luftleitvorrichtung ist vorzugsweise dazu eingerichtet, Luft gezielt zur Luftreinigungseinrichtung zu leiten. Die Luftleitvorrichtung ist vorzugsweise als Luftleitblech oder Luftleitkanal ausgebildet. Die Luftleitvorrichtung ist vorzugsweise im Nahbereich der Belüftungseinrichtung positioniert und/oder Bestandteil der Belüftungseinrichtung. Vorzugsweise sind mehrere Luftleitvorrichtungen an einer Belüftungseinrichtung zum Leiten der Luft angeordnet.

In einer Weiterbildung des erfindungsgemäßen freibelüfteten Gebäudes umfasst das frei belüftete Gebäude zumindest eine sensorische Messeinrichtung zum sensorischen Erfassen von Schadstoffparametern und/oder Schadgasparametern der Luft in zumindest einem Messbereich innerhalb des Gebäudes und/oder in zumindest einem Messbereich in der Umgebung des Gebäudes. Vorzugsweise ist die zumindest eine sensorische Messeinrichtung Bestandteil des Gebäudebelüftungssystems. Die Messeinrichtung kann an der Luftreinigungseinrichtung angeordnet sein. Die Messeinrichtung ist vorzugsweise dazu eingerichtet, Schadstoffe, wie Staub, und/oder Schadgase, wie Ammoniak und CO2, in der Luft im Nahbereich der Messeinrichtung zu ermitteln. Die Messeinrichtung kann messeinrichtungsinterne Sensoren und/oder messeinrichtungsexterne Sensoren zum sensorischen Erfassen der Schadstoffparameter und/oder der Schadgasparameter umfassen. Die messeinrichtungsexternen Sensoren sind dazu eingerichtet, Schadstoffe und/oder Schadgase in von der Messeinrichtung entfernt liegenden Messbereichen zu erfassen. Die messeinrichtungsexternen Sensoren können über Kabel oder kabellos mit der Messeinrichtung energieleitend und/oder signalleitend verbunden sein. Vorzugsweise ist die Messeinrichtung zudem dazu eingerichtet, die Luft innerhalb und/oder außerhalb des Gebäudes betreffende Luftparameter, insbesondere die Luftzusammensetzung, die Lufttemperatur und/oder die Luftfeuchtigkeit, zu ermitteln. Die Messeinrichtung ist vorzugsweise weiterhin dazu eingerichtet, die erfassten Schadstoffparameter und/oder Schadgasparameter und/oder Luftparameter auszuwerten und/oder in Form von Messdaten auf einem Datenspeicher zu speichern. Vorzugsweise sind die gespeicherten Messdaten mittels eines externen mobilen Endgeräts, beispielsweise mittels eines Tablets, von dem Datenspeicher abrufbar. Ferner sind die von der Messeinrichtung erfassten Schadstoffparameter und/oder Schadgasparameter und/oder Luftparameter vorzugsweise mittels eines externen mobilen Endgeräts in Echtzeit anzeigbar und/oder auswertbar.

In einer weiteren bevorzugten Ausführungsform des erfindungsgemäßen frei belüfteten Gebäudes umfasst das frei belüftete Gebäude mehrere Messeinrichtungen zum sensorischen Erfassen von Schadstoffparametern und/oder Schadgasparametern der Luft in zumindest einem der jeweiligen Messeinrichtung zugeordneten Messbereich innerhalb des Gebäudes und/oder in zumindest einem der jeweiligen Messeinrichtung zugeordneten Messbereich in der Umgebung des Gebäudes, wobei vorzugsweise mehreren oder sämtlichen Messeinrichtungen jeweils eine Luftreinigungseinrichtung zugeordnet ist und/oder an mehreren oder sämtlichen Messvorrichtungen jeweils eine Luftreinigungseinrichtung angeordnet ist. Vorzugsweise sind jeder Luftreinigungseinrichtung mehrere Messeinrichtungen zugeordnet. Mehrere Messeinrichtungen sind vorzugsweise an unterschiedlichen voneinander entfernten Stellen des Gebäudes und/oder in der Gebäudeumgebung positioniert. Vorzugsweise können die ermittelten Messwerte mehrerer Messeinrichtungen miteinander verglichen und/oder zu einem gemeinsamen Messwert gemittelt werden. Durch das Ermitteln mehrerer Messwerter mittels mehrerer Messeinrichtungen an unterschiedlichen voneinander entfernt liegenden Stellen des Gebäudes kann vorzugsweise ein Schadstoff- und/oder Schadgasprofil der Schadstoffe und/oder Schadgase im Gebäude und/oder in der Gebäudeumgebung erstellt werden.

In einer anderen bevorzugten Ausführungsform des erfindungsgemäßen frei belüfteten Gebäudes umfasst das freibelüftete Gebäude eine Steuerungseinrichtung zum Steuern der zumindest einen Luftreinigungseinrichtung, wobei die Steuerungseinrichtung vorzugsweise dazu eingerichtet ist, die Luftreinigungseinrichtung auf Grundlage der ermittelten Schadstoffparameter und/oder Schadgasparameter zu steuern. Vorzugsweise ist die Steuerungseinrichtung eine elektronische Steuerungseinrichtung. Vorzugsweise wird die Luftreinigungseinrichtung auf Grundlage von Steuerungsvorgaben gesteuert, welche aus den ermittelten Schadstoffparametern und/oder Schadgasparametern der Messeinrichtung abgeleitet werden. Die Steuerungsvorgaben können von der Steuerungseinrichtung und/oder der Messeinrichtung durch Auswerten der ermittelten Schadstoffparameter und/oder Schadgasparameter abgeleitet werden. Vorzugsweise sind die Steuerungseinrichtung und die Messeinrichtung signalleitend miteinander verbunden, sodass die Steuerungseinrichtung die ermittelten Schadstoffparameter und/oder Schadgasparameter und/oder daraus abgeleitete Steuerungsvorgaben von der Messeinrichtung empfangen kann. Vorzugsweise kann die Steuerungseinrichtung mittels eines externen mobilen Endgeräts beeinflusst werden, beispielsweise durch manuelles Anpassen und/oder Vorgeben der Steuerungsvorgaben oder manuelles Steuern der Luftreinigungseinrichtung. Vorzugsweise sind die Steuerungsvorgaben auf einem Datenspeicher ablegbar und/oder von einem Datenspeicher abrufbar. Die Steuerungseinrichtung ist vorzugsweise dazu eingerichtet, die Abscheideintensität und/oder die Abscheiderate der Luftreinigungseinrichtung zu steuern, insbesondere durch Einstellen des Volumenstroms der durch die Luftreinigungseinrichtung strömenden und zu reinigenden Luft. Beim Steuern der Luftreinigungseinrichtung und/oder beim Ableiten der Steuerungsvorgaben für die Steuerungseinrichtung werden vorzugsweise unterschiedliche Schadstoffe und/oder unterschiedliche Schadgase und/oder deren Konzentration in der Luft unterschiedlich berücksichtigt und/oder unterschiedlich gewichtet. Insbesondere kann zum Steuern der Luftreinigungsvorrichtung und/oder zum Ableiten von Steuerungsvorgaben für die Steuerungseinrichtung eine Differenz einer ermittelten Schadgas- und/oder Schadstoffkombination zu einem vorgegebenen Grenzwert berücksichtigt werden. Die Steuerungseinrichtung kann Bestandteil einer bereits vorhandenen Klimatisierungseinrichtung für das belüftete Gebäude, insbesondere einer bereits vorhandenen Stallklimatisierung eines frei belüfteten Tierstalls, sein. Dadurch kann eine Vernetzung der Luftreinigungseinrichtung mit einem bestehenden Stallklimatisierungssystem ermöglicht werden. Die Steuerungseinrichtung ist zudem vorzugsweise dazu eingerichtet, Luftleitelemente zum Leiten von Luft und/oder Luftfördereinrichtungen zum Fördern von Luft zu der Luftreinigungseinrichtung zu steuern. Vorzugsweise umfasst die Steuerungseinrichtung eine elektronische Anzeigeeinrichtung, insbesondere eine berührungsempfindliche Anzeige, und/oder ist die Steuerungseinrichtung mit einer externen elektronischen Anzeigeeinrichtung, insbesondere einer externen berührungsempfindlichen Anzeige verbunden, auf welcher ermittelte Schadstoffparameter und/oder Schadgasparameter und/oder daraus abgeleitete Steuerungsvorgaben und/oder vorgegebene Grenzwerte für Schadstoffparameter und/oder Schadgasparameter angezeigt und/oder manuell eingestellt werden können. Die Steuerungseinrichtung ist vorzugsweise signalleitend mit der Luftreinigungseinrichtung verbunden, wobei über die signalleitende Verbindung aus Steuervorgaben abgeleitete Steuerbefehle zum Steuern der Luftreinigungsvorrichtung übertragen werden. Zudem kann die Steuerungseinrichtung mit Luftleitelementen und/oder mit Luftfördereinrichtungen signalleitend verbunden sein. Die Steuerungsvorgaben können alternativ oder zusätzlich eine Differenz von ermittelten Schadstoffparametern und/oder Schadgasparametern von zumindest zwei Messeinrichtungen, beispielsweise Schadstoffparameter und/oder Schadgasparameter innerhalb und außerhalb des Gebäudes, betreffen.

Es ist außerdem ein erfindungsgemäßes freibelüftetes Gebäude vorteilhaft, bei welchem die Steuerungseinrichtung dazu eingerichtet ist, den Elektroabscheider und/oder den Filter der zumindest einen Luftreinigungseinrichtung, vorzugsweise auf Grundlage der ermittelten Schadstoffparameter und/oder Schadgasparameter, zum Abscheiden von Partikeln und/oder Schadgasen aus der Luft zu steuern. Vorzugsweise ist die Durchflussrate an Luft durch den Filter anpassbar. Vorzugsweise ist die Stärke eines durch den Elektroabscheider erzeugten elektrischen Feldes anpassbar. Durch ein Anpassen der Durchflussrate an Luft durch den Filter und/oder der Stärke des durch den Elektroabscheider erzeugten elektrischen Felds kann die Abscheiderate der Luftreinigungseinrichtung gesteuert werden. Vorzugsweise wird der Filter und/oder der Elektroabscheider auf Grundlage eines einzelnen ermittelten Schadstoffparameters und/oder Schadgasparameters und/oder auf Grundlage einer ermittelten Schadstoff- und/oder Schadgasmischung gesteuert. Durch das Steuern des Elektroabscheiders und/oder des Filters der zumindest einen Luftreinigungseinrichtung kann die Luftreinigungseinrichtung je nach Schadstoff- und/oder Schadgaskonzentration bedarfsgesteuert werden. Insbesondere kann der Filter und/oder der Elektroabscheider der Luftreinigungseinrichtung in Abhängigkeit der Schadstoff- und/oder Schadgaskonzentration in der Luft eingeschaltet und ausgeschaltet werden, beispielsweise um Energie zu sparen, wenn die Schadstoff- und/oder Schadgaskonzentration unterhalb von beabsichtigten Grenzwerten liegt.

Es ist weiterhin ein erfindungsgemäßes freibelüftetes Gebäude bevorzugt, bei welchem zumindest eine Positioniereinrichtung dazu eingerichtet ist, die Position und/oder die Ausrichtung der Luftreinigungseinrichtung anzupassen, wobei die Positioniereinrichtung vorzugsweise dazu eingerichtet ist, mittels der Steuerungseinrichtung auf Grundlage der ermittelten Schadstoffparameter und/oder Schadgasparameter gesteuert zu werden. Vorzugsweise ist die Position und/oder die Ausrichtung und/oder die Lage der Luftreinigungseinrichtung in Bezug auf eine Belüftungseinrichtung des Gebäudes anpassbar. Insbesondere ist die Luftreinigungseinrichtung mittels der Positioniereinrichtung entlang eines Positionierpfads verfahrbar und/oder um eine Schwenkachse verschwenkbar. Vorzugsweise umfasst die Positioniereinrichtung zum Verfahren und/oder Verschwenken der Luftreinigungseinrichtung zumindest einen Aktor, beispielsweise einen Hydraulikzylinder und/oder einen Elektromotor. Vorzugsweise kann durch Anpassen der Position und/oder der Ausrichtung der Luftreinigungseinrichtung die durch die Luftreinigungseinrichtung strömende Luftmenge geregelt werden. Ferner kann die Position und/oder die Ausrichtung der Luftreinigungseinrichtung in Abhängigkeit eines Status der Belüftungseinrichtung angepasst werden. Der Status der Belüftungseinrichtung kann beispielsweise ein aktueller Öffnungszustand einer Wickellüftung oder eine aktuelle Änderung des Öffnungszustands einer Wickellüftung sein. Wird beispielsweise eine Wickellüftung weiter geöffnet, kann dadurch mehr Luft aus dem Gebäude ausströmen. In einem solchen Fall kann die Positioniereinrichtung die Luftreinigungseinrichtung so positionieren und/oder ausrichten, dass die Luftreinigungseinrichtung durch ihre angepasste Position und/oder die angepasste Ausrichtung die durch die größere Öffnung strömende Luft reinigen kann.

In einer Weiterbildung des erfindungsgemäßen frei belüfteten Gebäudes, ist die Steuerungseinrichtung dazu eingerichtet, die zumindest eine Luftreinigungseinrichtung auf Grundlage von sensorisch ermittelten und/oder simulierten Strömungsdaten zum Abscheiden von Partikeln und/oder Schadgasen aus der Luft zu steuern und/oder ist die Positioniereinrichtung dazu eingerichtet, die Position und/oder die Ausrichtung der Luftreinigungseinrichtung auf Grundlage von sensorisch ermittelten und/oder simulierte Strömungsdaten anzupassen, wobei die Positioniereinrichtung vorzugsweise dazu eingerichtet ist, mittels der Steuerungseinrichtung auf Grundlage der sensorisch ermittelten und/oder simulierte Strömungsdaten gesteuert zu werden. Die Strömungsdaten können in Echtzeit ermittelte Strömungsdaten einer aktuellen Strömungssituation sein. Die Strömungsdaten können mittels einer Strömungssimulation auf Grundlage eines Rechenmodells ermittelte Strömungsdaten sein. Insbesondere basieren die Strömungsdaten auf einer mittels eines Berechnungsalgorithmus erzeugten digitalen Repräsentanz des freibelüfteten Gebäudes, auch digitaler Zwilling genannt. Zum Erzeugen der Strömungsdaten werden vorzugsweise die Gebäudegeometrie, der Gebäudebetriebszustand, und/oder Klimadaten berücksichtigt. Die Strömungsdaten sind vorzugsweise auf einem Datenspeicher speicherbar und/oder von einem Datenspeicher abrufbar. Vorzugsweise enthalten die Strömungsdaten Informationen zu der Strömungscharakteristik der innerhalb des Gebäudes und/oder in der Gebäudeumgebung und/oder der durch Belüftungseinrichtungen des Gebäudes strömenden Luft. Insbesondere können die Strömungsdaten die Strömungsrichtung, die Strömungsgeschwindigkeit und/oder Strömungskennwerte, wie die Reynoldszahl, der strömenden Luft umfassen. Zudem können die Strömungsdaten gebäudespezifische Daten des frei belüfteten Gebäudes umfassen, insbesondere die Gebäudegeometrie, Strömungskennwerte von angeströmten und/oder umströmten Geometrien, beispielsweise die cw-Werte, und/oder die Positionen der Luftreinigungseinrichtung, der Belüftungseinrichtung und/oder der Messeinrichtung. Vorzugsweise sind aus den Strömungsdaten Steuerungsvorgaben zum Steuern der Luftreinigungseinrichtung ableitbar.

Die der Erfindung zugrundeliegende Aufgabe wird weiterhin durch ein Verfahren zum Betreiben der eingangs genannten gelöst, wobei im Rahmen des Verfahrens Partikel und/oder Schadgase aus Luft mittels zumindest einer Luftreinigungseinrichtung abgeschieden werden.

In einer bevorzugten Ausführungsform des erfindungsgemäßen Verfahrens zum Betreiben wird im Rahmen des Verfahrens ein freibelüftetes Gebäude nach einer der vorstehenden Ausführungsformen betrieben. Hinsichtlich der Vorteile und Modifikationen des erfindungsgemäßen Verfahrens zum Betreiben wird auf die Vorteile und Modifikationen des erfindungsgemäßen frei belüfteten Gebäudes verwiesen.

In einer anderen bevorzugten Ausführungsform des erfindungsgemäßen Verfahrens werden Partikel und/oder Schadgase mittels eines Elektroabscheiders der Luftreinigungseinrichtung und/oder mittels eines Filters der Luftreinigungseinrichtung abgeschieden. Alternativ oder zusätzlich wird Luft mittels zumindest einer Luftleitvorrichtung zu der Luftreinigungseinrichtung geleitet. Alternativ oder zusätzlich werden Schadstoffparameter und/oder Schadgasparameter von Luft in zumindest einem Messbereich innerhalb des Gebäudes und/oder in zumindest einem Messbereich in der Umgebung des Gebäudes mittels zumindest einer sensorischen Messeinrichtung sensorisch erfasst.

Es ist weiterhin ein erfindungsgemäßes Verfahren bevorzugt, bei welchem die zumindest eine Luftreinigungseinrichtung und/oder der Elektroabscheider und/oder der Filter der Luftreinigungseinrichtung auf Grundlage der ermittelten Schadstoffparameter und/oder Schadgasparameter mittels einer Steuerungseinrichtung gesteuert wird. Alternativ oder zusätzlich wird die Position und/oder die Ausrichtung der Luftreinigungseinrichtung auf Grundlage der ermittelten Schadstoffparameter und/oder Schadgasparameter mittels einer Positioniereinrichtung angepasst, insbesondere wird die Luftreinigungseinrichtung verfahren und/oder verschwenkt. Alternativ oder zusätzlich wird die zumindest eine Luftreinigungseinrichtung und/oder der Elektroabscheider und/oder der Filter der Luftreinigungseinrichtung auf Grundlage von sensorisch ermittelten und/oder simulierten Strömungsdaten zum Abscheiden von Partikeln und/oder Schadgasen aus der Luft mittels der Steuerungseinrichtung gesteuert. Alternativ oder zusätzlich wird die Position und/oder die Ausrichtung der Luftreinigungseinrichtung auf Grundlage von sensorisch ermittelten und/oder simulierten Strömungsdaten mittels der Positioniereinrichtung angepasst, insbesondere wird die Luftreinigungseinrichtung verfahren und/oder verschwenkt.

Außerdem ist ein erfindungsgemäßes Verfahren vorteilhaft, bei welchem eine digitale Repräsentanz des freibelüfteten Gebäudes mittels einer elektronischen Datenverarbeitungseinrichtung erzeugt wird. Alternativ oder zusätzlich werden Strömungsdaten auf Grundlage der digitalen Repräsentanz mittels eines Berechnungsalgorithmus berechnet. Die Strömungsdaten beziehen sich vorzugsweise auf einen Standort oder Installationsort der Luftreinigungseinrichtung. Das Erzeugen einer digitalen Repräsentanz des frei belüfteten Gebäudes umfasst vorzugsweise das Ermitteln von Gebäudegeometriedaten des frei belüfteten Gebäudes und/oder das Ermitteln von Gebäudebetriebsdaten des frei belüfteten Gebäudes und/oder das Berücksichtigen von Klimadaten und/oder das Berechnen der digitalen Repräsentanz des freibelüfteten Gebäudes auf Grundlage der Gebäudegeometriedaten und/oder der Gebäudebetriebsdaten und/oder der Klimadaten über einen Berechnungsalgorithmus mittels einer elektronischen Datenverarbeitungseinrichtung.

Die der Erfindung zugrundeliegende Aufgabe wird außerdem durch ein Verfahren zum Bestimmen eines Installationsortes für eine Luftreinigungseinrichtung für ein frei belüftetes Gebäude, insbesondere für einen freibelüfteten Tierstall, gelöst, wobei im Rahmen des Verfahrens zum Bestimmen eine digitale Repräsentanz des freibelüfteten Gebäudes mittels einer elektronischen Datenverarbeitungseinrichtung erzeugt wird, Strömungsdaten auf Grundlage der digitalen Repräsentanz mittels eines Berechnungsalgorithmus berechnet werden und der Installationsort für die Luftreinigungseinrichtung auf Grundlage der ermittelten Strömungsdaten ermittelt wird. Vorzugsweise wird im Rahmen des erfindungsgemäßen Verfahrens der Installationsort der Luftreinigungseinrichtung für ein freibelüftetes Gebäude nach einer der vorstehenden Ausführungsformen bestimmt. Hinsichtlich der Vorteile und Modifikationen des erfindungsgemäßen Verfahrens zum Bestimmen wird auf die Vorteile und Modifikationen des erfindungsgemäßen frei belüfteten Gebäudes verwiesen.

Die der Erfindung zugrundeliegende Aufgabe wird ferner durch ein Verfahren zum Erzeugen einer digitalen Repräsentanz eines frei belüfteten Gebäudes, insbesondere eines freibelüfteten Tierstalls, gelöst, wobei Gebäudegeometriedaten des frei belüfteten Gebäudes und Gebäudebetriebsdaten des freibelüfteten Gebäudes ermittelt werden, Klimadaten berücksichtigt werden und die digitale Repräsentanz des freibelüfteten Gebäudes auf Grundlage der Gebäudegeometriedaten und/oder der Gebäudebetriebsdaten und/oder der Klimadaten über einen Berechnungsalgorithmus mittels einer elektronischen Datenverarbeitungseinrichtung berechnet wird. Die digitale Datenverarbeitungseinrichtung kann ein PC oder ein Server oder ein portables Endgerät, beispielsweise ein Smartphone oder Tablet sein. Die Gebäudebetriebsdaten umfassen insbesondere Informationen zum Betriebsstatus der Belüftungseinrichtung. Die Informationen zum Betriebsstatus der Belüftungseinrichtung können beispielsweise den Öffnungszustand von Wickellüftungen der Belüftungseinrichtung umfassen. Die Klimadaten umfassen insbesondere Informationen zur Luftfeuchtigkeit, Temperatur und Windgeschwindigkeit der Luft im Gebäude und/oder in der Gebäudeumgebung. Vorzugsweise wird im Rahmen des erfindungsgemäßen Verfahrens die digitale Repräsentanz eines freibelüfteten Gebäudes nach einer der vorstehenden Ausführungsformen bestimmt. Hinsichtlich weiterer Vorteile und Modifikationen des erfindungsgemäßen Verfahrens zum Erzeugen wird auf die Vorteile und Modifikationen des erfindungsgemäßen freibelüfteten Gebäudes verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes freibelüftetes Gebäude in einer schematischen perspektivischen Darstellung;
- Fig. 2: das freibelüftete Gebäude aus der Fig. 1 in einem anderen Betriebszustand in einer schematischen perspektivischen Darstellung;
- Fig. 3: das freibelüftete Gebäude aus der Fig. 1 in einem weiteren Betriebszustand in einer schematischen perspektivischen Darstellung;
- Fig. 4: eine erfindungsgemäße digitale Repräsentanz eines freibelüfteten Gebäudes in einer schematischen perspektivischen Darstellung;
- Fig. 5: eine weitere digitale Repräsentanz eines frei belüfteten Gebäudes mit Umgebung in einer schematischen perspektivischen Darstellung;
- Fig. 6: eine Strömungssimulation an einer digitalen Repräsentanz eines frei belüfteten Gebäudes in einer schematischen Seitenansicht;
- Fig. 7: eine Strömungssimulation an einer digitalen Repräsentanz eines frei belüfteten Gebäudes in einer schematischen Draufsicht; und
- Fig. 8: eine Strömungssimulation an der digitalen Repräsentanz aus Fig. 7 in einem anderen Betriebszustand des frei belüfteten Gebäudes in einer schematischen Draufsicht.

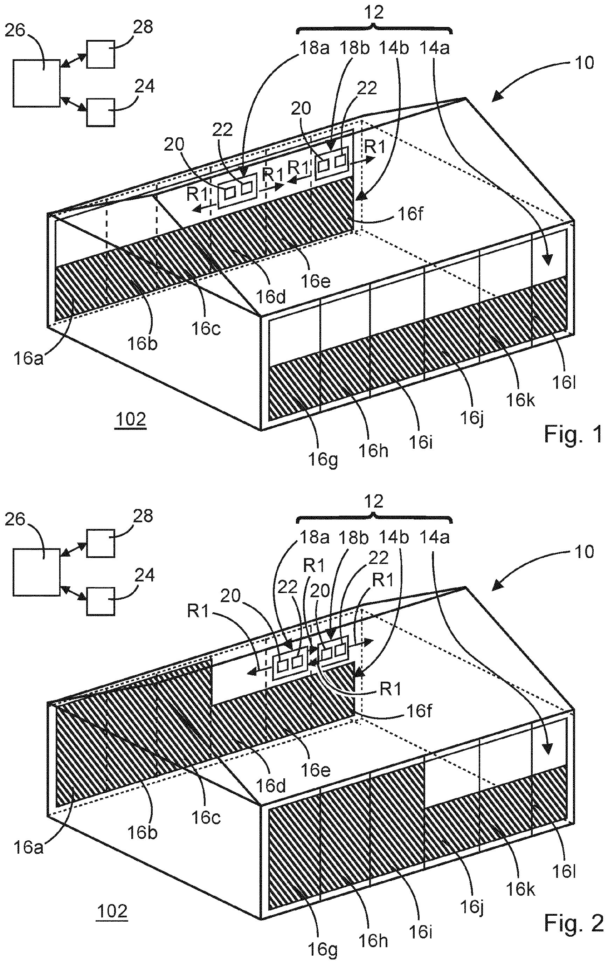

Die Fig. 1 bis 3 zeigen jeweils ein erfindungsgemäßes frei belüftetes Gebäude 10 in unterschiedlichen Gebäudebetriebszuständen. Das Gebäude 10 ist als frei belüfteter Tierstall, beispielsweise für die landwirtschaftliche Haltung von Rindern, Schweinen oder Hühnern, ausgeführt. Das Gebäude 10 ist mit einem Gebäudebelüftungssystem 12 ausgestattet, mittels welchem das Gebäudeinnere belüftet wird, indem ein Luftaustausch der Abluft aus dem Gebäudeinneren des Gebäudes 10 mit frischer Außenluft aus der Umgebung 102 im Wesentlichen durch natürliche Luftbewegungen, insbesondere Wind, in der Umgebung 102 des Gebäudes, stattfindet. Zum Belüften des Gebäudes 10 umfasst das Gebäudebelüftungssystem 12 in der dargestellten Ausführungsform des frei belüfteten Gebäudes 10 jeweils sechs als rechteckige Gebäudeöffnungen ausgebildete Belüftungseinrichtungen 14a, und sechs als rechteckige Gebäudeöffnungen ausgebildete Belüftungseinrichtungen 14b, wobei die Belüftungseinrichtungen 14a und die Belüftungseinrichtungen 14b sich jeweils gegenüberliegend an sich gegenüberliegenden Seitenwänden des Gebäudes 10 angeordnet sind. Durch die Belüftungseinrichtungen 14a, 14b kann Frischluft aus der Umgebung 102 in das Gebäude 10 einströmen und/oder Abluft aus dem Gebäude 10 ausströmen. In dem dargestellten Beispiel ist das Gebäudebelüftungssystem 12 derart ausgebildet, dass Frischluft durch die Belüftungseinrichtungen 14a in das Gebäude 10 einströmt und durch die durch die einströmende Frischluft verdrängte Abluft aus den Belüftungseinrichtungen 14b aus dem Gebäude hinausströmt.

Weiterhin sind an den Belüftungseinrichtungen 14a Wickellüftungen 16g-16l und an den Belüftungseinrichtungen 14b Wickellüftungen 16a-16f angeordnet, mittels welcher die als Gebäudeöffnungen ausgebildeten Belüftungseinrichtungen 14a, 14b segmentweise und/oder zumindest abschnittsweise geöffnet und/oder geschlossen werden können. Auf diese Weise können mittels der Wickellüftungen 16a-16l die einströmenden und/oder ausströmenden Luftvolumenströme, Luftströmungsgeschwindigkeiten und/oder Luftströmungsrichtungen eingestellt werden. In der Fig. 1 sind die Wickellüftungen 15a-15l etwa zur Hälfte geschlossen dargestellt.

Das Gebäudebelüftungssystem 12 umfasst zudem Luftreinigungseinrichtungen 18a, 18b, wobei in der Fig. 1 die Luftreinigungseinrichtung 18a in der von der Wickellüftung 16d gebildeten Gebäudeöffnung und die Luftreinigungseinrichtung 18b in der von der Wickellüftung 16f gebildeten Gebäudeöffnung angeordnet sind, sodass die Abluft, welche durch die von den Wickellüftungen 16d, 16f gebildeten Gebäudeöffnungen aus dem Gebäude 10 ausströmt, zumindest teilweise oder vollständig durch die Luftreinigungseinrichtungen 18a, 18b strömt. Die durch die Luftreinigungseinrichtungen 18a, 18b strömende Abluft aus dem Gebäude 10 wird durch die Luftreinigungseinrichtungen 18a, 18b gereinigt. Es können auch noch weitere Luftreinigungseinrichtungen 18a, 18b an weiteren Gebäudeöffnungen angeordnet sein, um eine größere ausströmende Luftmenge zu filtern. Die Position der Luftreinigungseinrichtungen 18a, 18b kann vor der Montage der Luftreinigungseinrichtungen 18a, 18b und/oder in Echtzeit während des Betriebs in Abhängigkeit der Einstellung der Wickellüftungen 16a-16l und sich dadurch ändernde Strömungsbedingungen angepasst werden.

Zu diesem Zweck umfassen die Luftreinigungseinrichtungen 18a, 18b jeweils zumindest einen Elektroabscheider 20 und zumindest einen Filter 22. Mittels des Elektroabscheiders 20 können insbesondere Partikel, beispielsweise Staubpartikel, insbesondere Feinstaub, aus der Abluft abgeschieden werden, wobei in der Abluft befindliche Partikel durch den Elektroabscheider 20 in einem elektrischen Feld statisch aufgeladen und an einer Abscheideelektrode des Elektroabscheiders 20 haften. Der Filter 22 kann ein oder mehrere Filterschichten, beispielsweise aus einem Vliesstoff und/oder aus Papier umfassen. Zudem kann der Filter 22 zumindest eine mit Aktivkohle behandelte Filterschicht umfassen. Mittels des Filter 22 können unterschiedliche Schadstoffe und/oder Schadgase aus der Abluft des Gebäudes 10 gefiltert werden. Insbesondere Schadgase, welche sich durch die Nutztierhaltung in der Abluft ansammeln, wie beispielsweise Methan, Ammoniak oder Schwefelwasserstoff, können so aus der aus dem Gebäude 10 ausströmenden Abluft herausgefiltert werden. Auf diese Weise werden Umweltschäden und/oder Geruchsbelästigungen durch zu hohe Schadstoff- und/oder Schadgaskonzentrationen in der Umgebung 102 des Gebäudes 10 vermieden und festgelegte Grenzwerte für Schadstoffe und/oder Schadgase eingehalten werden. Um die ausströmende Abluft gezielt zu den Luftreinigungseinrichtungen 18a, 18b zu leiten, können zudem Luftleitvorrichtungen, beispielsweise Luftleitbleche und/oder Luftleitkanäle, vorgesehen werden.

Das Gebäude 10 umfasst außerdem zumindest eine sensorische Messeinrichtung 24, welche unterschiedliche Sensoren zum Erfassen von Luftparametern aufweisen kann. Mittels der Messeinrichtung 24 können Schadstoff- und/oder Schadgasparameter der Abluft des Gebäudes 10 ermittelt werden. Es können mittels der Messeinrichtung 24 beispielsweise Schadstoffe, wie Staub, und/oder Schadgase, wie Ammoniak und CO2, im Gebäude 10 ermittelt werden. Die Messeinrichtung 24 kann zum Erfassen von Schadgas- und/oder Schadstoffparametern im Nahbereich oder an einer Luftreinigungseinrichtung 18a, 18b oder an einer sonstigen repräsentativen Position im Gebäude 10 angebracht sein. Zudem können mehrere Messeinrichtungen an unterschiedlichen Positionen im Gebäude 10 und/oder außerhalb des Gebäudes 10 vorgesehen werden. Insbesondere umfasst das Gebäude 10 für jede Luftreinigungsvorrichtung 18a, 18b zumindest eine der jeweiligen Luftreinigungsvorrichtung 18a, 18b zugeordnete Messeinrichtung 24.

Das Gebäude 10 umfasst ferner eine Positioniereinrichtung 28, mittels welcher die Luftreinigungseinrichtungen 18a, 18b zum Einstellen der Position und/oder Ausrichtung der Luftreinigungseinrichtungen 18a, 18b bewegt, insbesondere verfahren, werden können. Die Positioniereinrichtung 28 kann beispielsweise Führungen, insbesondere Linearführungen, umfassen, mittels welcher die Luftreinigungseinrichtungen 18a, 18b in einer horizontalen Richtung R1 und/oder in einer vertikalen Richtung R2 verfahrbar sind. Zudem können die Luftreinigungseinrichtungen 18a, 18b mittels der Positioniereinrichtung 28 verdreht und/oder verschwenkt werden. Durch das Einstellen der Position und/oder der Ausrichtung der Luftreinigungseinrichtungen 18a, 18b kann sichergestellt werden, dass in jedem Strömungszustand der Abluft genügend Abluft mittels der Luftreinigungseinrichtungen 18a, 18b gereinigt wird.

Des Weiteren umfasst das Gebäude 10 eine Steuerungseinrichtung 26 mittels welcher die Luftreinigungseinrichtungen 18a, 18b und/oder die Positioniereinrichtung 28 und/oder die Wickellüftungen 16, 16a-16l gesteuert werden können. Insbesondere werden die Luftreinigungseinrichtungen 18a, 18b und/oder die Positioniereinrichtung 28 und/oder die Wickellüftungen 16, 16a-16l in Abhängigkeit der mittels der Messeinrichtung 24 sensorisch ermittelten Schadgas- und/oder Schadstoffparameter und/oder in Abhängigkeit einer aktuellen Strömungssituation und/oder in Abhängigkeit eines aktuellen Gebäudebetriebsstatus, insbesondere in Abhängigkeit des Öffnungsstatus der Wickellüftungen 16, 16a-16l, gesteuert. Die Steuerungseinrichtung 26 ist zum Steuern signalleitend mit den Luftreinigungseinrichtungen 18a, 18b und/oder den Positioniereinrichtung 28 und/oder den Wickellüftungen 16, 16a-16l verbunden.

Zudem ist die Steuerungseinrichtung zum Empfangen der sensorisch ermittelten Messwerte signalleitend mit der Messeinrichtung 24 verbunden. Mittels der Steuerungseinrichtung 26 kann beispielsweise die Filterungsintensität der Luftreinigungseinrichtungen 18a, 18b, insbesondere die Stärke eines von einem Elektroabscheider 20 erzeugtes elektrisches Felds, eingestellt werden, um die Effizienz der Luftreinigungseinrichtungen 18a, 18b zu erhöhen.

Die Fig. 2 zeigt das freibelüftete Gebäude 10 aus der Fig. 1 in einem anderen Gebäudebetriebsstatus, in welchem die Wickellüftungen 16a-16c, 16g-16i im Wesentlichen vollständig geschlossen und die Wickellüftungen 16d-16f, 16j-16l in etwa zur Hälfte geschlossen sind. In der Fig. 2 ist eine beispielhafte Situation dargestellt, in der sich eine durch die im Vergleich zur Fig. 1 veränderte Einstellung der Wickellüftungen 16a-16l neue Strömungssituation im Gebäude 10 einstellt. Durch die neue Strömungssituation können außerdem die durch die Messeinrichtung 24 erfassten Schadstoff- und/oder Schadgaskonzentrationen in der Abluft verändert sein. In der Folge der veränderten Strömungssituation und/oder des veränderten Gebäudebetriebsstatus und/oder der veränderten Schadgas- und/oder Schadstoffkonzentration ist die Position der Luftreinigungseinrichtungen 18a, 18b auf Veranlassung der Steuerungsreinrichtung 26 mittels der Positioniereinrichtung 28 an die neue Situation angepasst worden, sodass eine weiterhin ausreichende Luftmenge durch die Luftreinigungseinrichtungen 18a, 18b strömen und durch diese gereinigt werden kann. Die Luftreinigungseinrichtung 18a ist daher durch ein Bewegen in der Richtung R1 nun im Bereich der Wickellüftung 16e angeordnet.

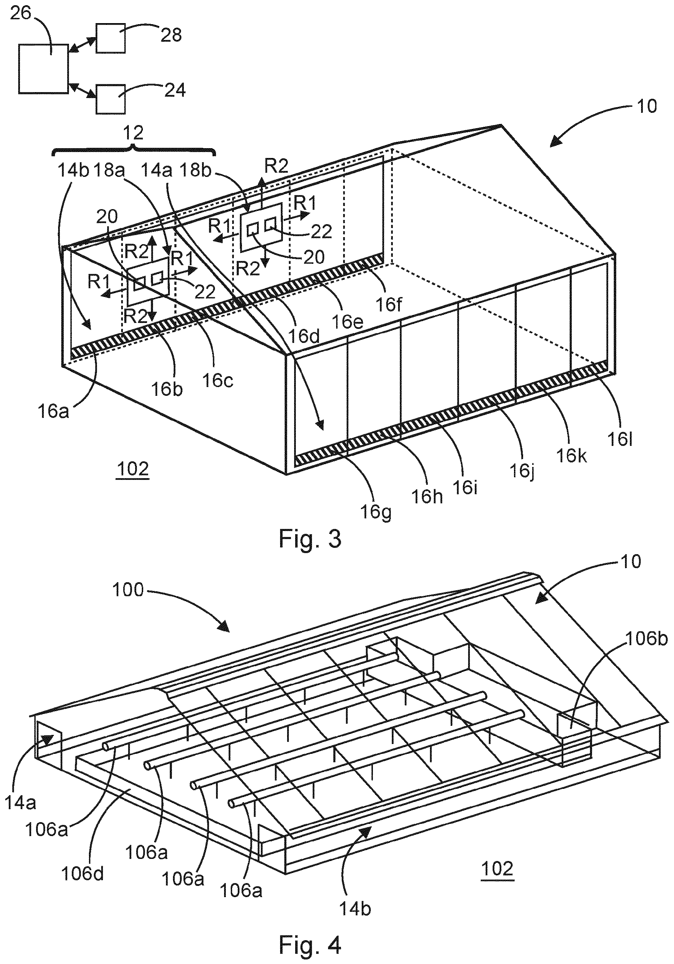

Die Fig. 3 zeigt das frei belüftete Gebäude 10 aus der Fig. 1 in einem weiteren Gebäudebetriebsstatus, in welchem die Wickellüftungen 16a-16l im Wesentlichen vollständig geöffnet sind. In der Fig. 3 ist dementsprechend eine weitere beispielhafte Situation dargestellt, in der sich eine durch die im Vergleich zur Fig. 1 veränderte Einstellung der Wickellüftungen 16a-16l neue Strömungssituation im Gebäude 10 einstellt. Durch die neue Strömungssituation können außerdem die durch die Messeinrichtung 24 erfassten Schadstoff- und/oder Schadgaskonzentrationen in der Abluft verändert sein. In der Folge der veränderten Strömungssituation und/oder des veränderten Gebäudebetriebsstatus und/oder der veränderten Schadgas- und/oder Schadstoffkonzentration ist die Position der Luftreinigungseinrichtungen 18a, 18b auf Veranlassung der Steuerungsreinrichtung 26 mittels der Positioniereinrichtung 28 an die neue Situation angepasst worden, sodass eine weiterhin ausreichende Luftmenge durch die Luftreinigungseinrichtungen 18a, 18b strömen und durch diese gereinigt werden kann. Die Luftreinigungseinrichtung 18a ist daher durch ein Bewegen in der Richtung R1 nun im Bereich der Wickellüftung 16b und die Luftreinigungseinrichtung 18a durch ein Bewegen in der Richtung R1 und zudem in der Richtung R2 im oberen Bereich der Wickellüftung 16d angeordnet.

Die Fig. 4 zeigt eine digitale Repräsentanz 100 eines freibelüfteten Gebäudes 10. Die digitale Repräsentanz 100 wurde auf Grundlage von Gebäudegeometriedaten des Gebäudes 10 von einer elektronischen Datenverarbeitungseinrichtung, insbesondere mittels eines PCs oder Servers, berechnet, um ein präzises digitales Abbild des Gebäudes 10 zu erzeugen. Die digitale Repräsentanz 100 kann nach dem Erzeugen dazu dienen, um beispielsweise vor der Installation von Luftreinigungseinrichtung 18a, 18b die optimale Positionierung der Luftreinigungseinrichtung 18a, 18b durch die Simulation von Luftströmungen durch das Gebäude 10 zu simulieren. Daher berücksichtigt die digitale Repräsentanz des Gebäudes 10 auch die Umgebung 102 des Gebäudes 10, sowie die als Gebäudeöffnungen ausgebildeten Belüftungseinrichtungen 14a, 14b und Hindernisse 106a, 106b, wobei die Hindernisse 6a als Ventilationsschläuche und die das Hindernis 106b als Bürotrakt innerhalb des Gebäudes 10 ausgebildet sind. Die Hindernisse 106a, 106b können die Luftströmung, insbesondere die Strömungsrichtung und/oder die Strömungsgeschwindigkeit der im Gebäude strömenden Frischluft und/oder Abluft beeinflussen, wobei dies folglich Auswirkungen auf die vorzunehmende Positionierung der Luftreinigungseinrichtung 18a, 18b haben kann.

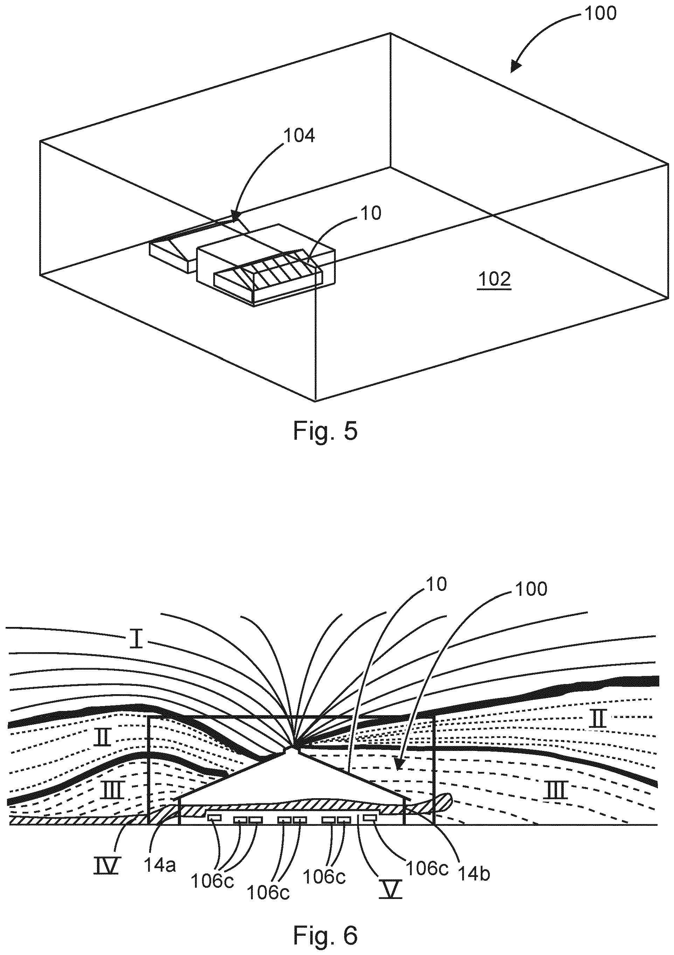

Die Fig. 5 zeigt eine digitale Repräsentanz 100, bei welcher neben einem Gebäude 10 ebenfalls die Umgebung 102 des Gebäudes 10 sowie ein im Nahbereich des Gebäudes 10 befindliches Nebengebäude 104 berücksichtigt ist. Objekte in der Umgebung 102 des Gebäudes 10, wie beispielsweise Nebengebäude 104, können die Luftströmung außerhalb des Gebäudes 10 und somit die Anströmung des Gebäudes 10 beeinflussen, wobei diese Beeinflussung mittels einer entsprechenden digitalen Repräsentanz 100 simuliert und berechnet werden kann., sodass Luftreinigungseinrichtungen 18a, 18b entsprechend ausgelegt und an die jeweilige Strömungssituation angepasst positioniert werden können.

Die Fig. 6 zeigt eine Seitenansicht einer Strömungssimulation auf Grundlage einer digitalen Repräsentanz 100 des freibelüfteten Gebäudes 10. Die schematisch gezeigten Luftströmungen sind idealisiert dargestellt, wobei es unter realen Umgebungsbedingungen zu Verwirbelungen und/oder strömungstechnischen Toträumen kommen kann, welche zur Vereinfachung der Darstellungen hier nicht gezeigt sind. Das Gebäude 10 wird in der Strömungssimulation von natürlichen Luftbewegungen in Form von Wind von links nach rechts angeströmt. In einem Strömungsbereich I liegt eine hohe Strömungsgeschwindigkeit vor. In einem Strömungsbereich II liegt eine durch die Anströmung des Gebäudes 10 niedrigere Strömungsgeschwindigkeit vor. In einem Strömungsbereich III liegt eine durch die Anströmung des Gebäudes 10 niedrigere Strömungsgeschwindigkeit als im Strömungsbereich II vor. Der Strömungsbereich IV veranschaulicht die Luftströmung, welche als Frischluft durch die Belüftungseinrichtung 14a in das Gebäude 10 eintritt und durch die Belüftungseinrichtung 14b aus dem Gebäude 10 als Abluft wieder austritt. Innerhalb des Gebäudes 10 befinden sich zudem als Tiere, beispielsweise Rinder, ausgebildete Hindernisse 106c, welche sich auf die Strömungsgeschwindigkeit und/oder die Strömungsrichtung der Luftströmung im Strömungsbereich IV auswirken können. In einem Strömungsbereich V, welcher innerhalb des Gebäudes 10 liegt, ist die Strömungsgeschwindigkeit der Luftströmung im Vergleich zum Strömungsbereich IV abgebremst, insbesondere durch die Hindernisse 106c.

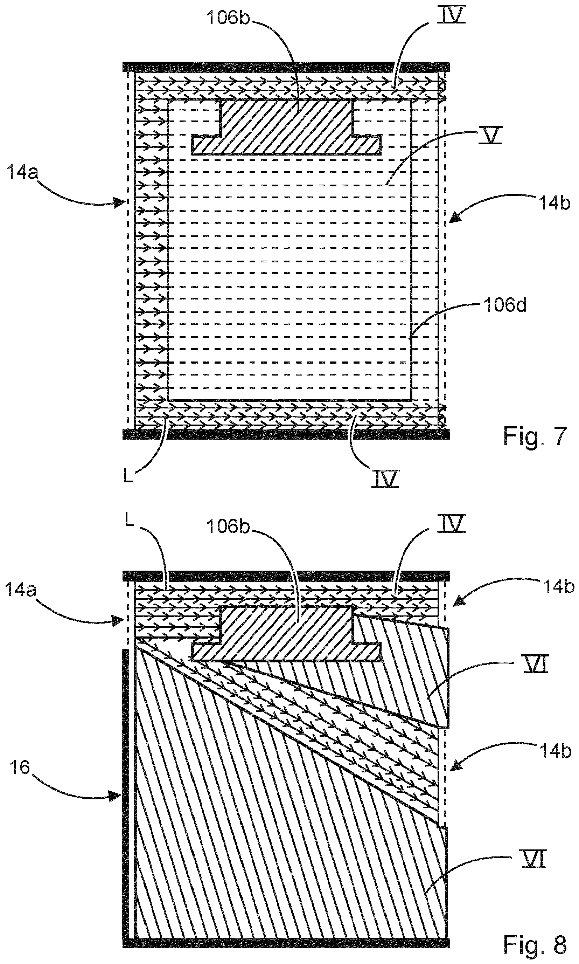

Die Fig. 7 und 8 zeigen weitere Strömungssimulationen auf Grundlage einer digitalen Repräsentanz 100 des Gebäudes 10 in einer schematischen Schnittansicht des Gebäudes 10 von oben. Wie in der Fig. 6 sind die schematisch gezeigten Luftströmungen auch hier idealisiert dargestellt. Unter realen Umgebungsbedingungen mögliche Verwirbelungen und/oder strömungstechnische Toträume sind aus Vereinfachungsgründen entsprechend nicht dargestellt.

In der Fig. 7 sind die als Gebäudeöffnungen ausgebildeten Belüftungseinrichtung 14a über die im Wesentlichen gesamte Breite des Gebäudes 10 vollständig geöffnet. Durch ein als Gestänge ausgebildetes Hindernis 106d und ein als Büroraum ausgebildetes Hindernis 106b wird die durch das Gebäude strömende Luft L innerhalb des Gebäudes 10 in zwei Strömungsbereiche IV, V geteilt, wobei im Strömungsbereich V durch die Hindernisse 106b, 106d eine niedrigere Strömungsgeschwindigkeit der Luft L einstellt. Im Strömungsbereich IV kann die Luft ungestört mit einer höheren Strömungsgeschwindigkeit strömen. Auf Grundlage dieser Strömungssimulation kann bestimmt werden, an welchen Positionen die Luftreinigungseinrichtungen 18a, 18b an den Belüftungseinrichtungen 14b positioniert und/oder installiert werden müssen, sodass eine möglichst große Menge Luft L zum Abscheiden von Schadstoffen und/oder Schadgasen durch die Luftreinigungseinrichtungen 18a, 18b nach außen aus dem Gebäude 10 hinausströmt. In dem in der Fig. 7 dargestellten Beispiel ergibt sich eine Strömungssituation, in welcher die größte Luftmenge an den Wänden des Gebäudes 10 entlang strömt, sodass die Luftreinigungseinrichtungen 18a, 18b ihre bestmögliche Filterwirkung entfalten, wenn diese im Nahbereich der Gebäudeaußenwände an den Belüftungseinrichtungen 14b installiert und/oder dort positioniert werden.

In der Fig. 8 sind die als Gebäudeöffnungen ausgebildeten Belüftungseinrichtung 14a, durch welche die Luft L in das Gebäude 10 einströmt, mittels Wickellüftungen 16 über eine große Teilbreite geschlossen, sodass die Luft L nur in einem kleinen Bereich der Belüftungseinrichtungen 14a im Nachbereich der oberen Seitenwand in das Gebäude eintreten kann. Durch das als Büroraum ausgebildete Hindernis 106b wird die durch das Gebäude strömende Luft L innerhalb des Gebäudes 10 in zwei Strömungsbereiche IV, VI geteilt, wobei sich im Strömungsbereich VI durch das Hindernis 106b und durch die geschlossenen Wickellüftungen 16 ein im Wesentlichen strömungstechnischer Totraum mit sehr niedriger Strömungsgeschwindigkeit der Luft L einstellt. Im Strömungsbereich IV kann die Luft ungestört mit einer höheren Strömungsgeschwindigkeit strömen. In dem in der Fig. 8 dargestellten Beispiel ergibt sich eine Strömungssituation, in welcher die größte Luftmenge jeweils seitlich am Hindernis 106b vorbeiströmt und sich somit zwei Bereiche an den Belüftungseinrichtungen 14b des Gebäudes 10 ergeben, in welchen die Luft L das Gebäude 10 verlässt, sodass die Luftreinigungseinrichtungen 18a, 18b ihre bestmögliche Filterwirkung entfalten, wenn diese in diesen entsprechenden Bereichen installiert und/oder dort positioniert werden.

Die Strömungssimulationen auf Grundlage einer digitalen Repräsentanz 100 des Gebäudes 10 können für die Bestimmung eines Installationsortes für eine Luftreinigungseinrichtung 18a, 18b genutzt werden. Weiterhin können die Strömungssimulationen auch in Echtzeit während des Betriebes des Gebäudes 10 fortlaufend erzeugt und ausgewertet werden, um die Luftreinigungseinrichtungen 18a, 18b während des Betriebs in Echtzeit an die jeweilige aktuelle Strömungssituation anzupassen und auf Grundlage der Strömungssimulation zu steuern. Insbesondere können die Position und Ausrichtung auf Grundlage der Strömungssimulationen angepasst werden.

### Bezugszeichen

- 10: freibelüftetes Gebäude
- 12: Gebäudebelüftungssystem
- 14a, 14b: Belüftungseinrichtungen
- 16, 16a-16l: Wickellüftungen
- 18a, 18b: Luftreinigungseinrichtungen
- 20: Elektroabscheider
- 22: Filter
- 24: Messeinrichtung
- 26: Steuerungseinrichtung
- 28: Positioniereinrichtung

- 100: digitale Repräsentanz
- 102: Umgebung
- 104: Nebengebäude
- 106a-106d: Hindernisse

- R1, R2: Richtung
- L: Luft

- I-VI: Strömungsbereiche

## Patentansprüche

1. Freibelüftetes Gebäude (10), insbesondere frei belüfteter landwirtschaftlicher Tierstall, mit
- einem Gebäudebelüftungssystem (12) zum Belüften des frei belüfteten Gebäudes (10),
**gekennzeichnet durch** zumindest eine Luftreinigungseinrichtung (18a, 18b) zum Abscheiden von Partikeln und/oder Schadgasen aus Luft (L).

2. Freibelüftetes Gebäude (10) nach Anspruch 1,
**dadurch gekennzeichnet, dass** die Luftreinigungseinrichtung (18a, 18b) zum Abscheiden von Partikeln und/oder Schadgasen aus der Luft (L) zumindest einen Elektroabscheider (20) umfasst.

3. Freibelüftetes Gebäude (10) nach Anspruch 1 oder 2,
**dadurch gekennzeichnet, dass** die Luftreinigungseinrichtung (18a, 18b) zum Abscheiden von Partikeln und/oder Schadgasen aus der Luft (L) zumindest einen Filter (22) umfasst.

4. Freibelüftetes Gebäude (10) nach einem der vorstehenden Ansprüche,
**dadurch gekennzeichnet, dass** das Gebäudebelüftungssystem (12) zumindest eine Belüftungseinrichtung (14a, 14b) aufweist, durch welche Luft (L) in das Gebäude (10) einströmbar und/oder aus dem Gebäude (10) ausströmbar ist, wobei die zumindest eine Luftreinigungseinrichtung (18a, 18b) derart angeordnet ist, dass Partikel und/oder Schadgase mittels der Luftreinigungseinrichtung (18a, 18b) aus der durch die Belüftungseinrichtung (14a, 14b) einströmende und/oder ausströmende Luft (L) abscheidbar sind.

5. Freibelüftetes Gebäude (10) nach einem der vorstehenden Ansprüche,
**dadurch gekennzeichnet, dass** das Gebäudebelüftungssystem (12) mehrere Belüftungseinrichtungen (14a, 14b) umfasst, wobei
- an einer, mehreren oder sämtlichen Belüftungseinrichtungen (14a, 14b) jeweils zumindest eine Luftreinigungseinrichtung (18a, 18b) zum Abscheiden von Partikeln und/oder Schadgasen aus der Luft (L) angeordnet ist; und/oder
- einer, mehreren oder sämtlichen Belüftungseinrichtungen (14a, 14b) jeweils zumindest eine Luftreinigungseinrichtung (18a, 18b) zum Abscheiden von Partikeln und/oder Schadgasen aus der Luft (L) zugeordnet ist.

6. Freibelüftetes Gebäude (10) nach einem der vorstehenden Ansprüche, **gekennzeichnet durch** zumindest eine Luftleitvorrichtung zum Leiten von Luft (L) zu der zumindest einen Luftreinigungseinrichtung (18a, 18b).

7. Freibelüftetes Gebäude (10) nach einem der vorstehenden Ansprüche, **gekennzeichnet durch** zumindest eine sensorische Messeinrichtung (24) zum sensorischen Erfassen von Schadstoffparametern und/oder Schadgasparametern der Luft (L) in zumindest einem Messbereich innerhalb des Gebäudes (10) und/oder in zumindest einem Messbereich in der Umgebung (102) des Gebäudes (10).

8. Freibelüftetes Gebäude (10) nach einem der vorstehenden Ansprüche, **gekennzeichnet durch** mehrere Messeinrichtungen (24) zum sensorischen Erfassen von Schadstoffparametern und/oder Schadgasparametern der Luft (L) in zumindest einem der jeweiligen Messeinrichtung (24) zugeordneten Messbereich innerhalb des Gebäudes (10) und/oder in zumindest einem der jeweiligen Messeinrichtung (24) zugeordneten Messbereich in der Umgebung (102) des Gebäudes (10), wobei vorzugsweise mehreren oder sämtlichen Messeinrichtungen (24) jeweils eine Luftreinigungseinrichtung (18a, 18b) zugeordnet ist und/oder an mehreren oder sämtlichen Messvorrichtungen (24) jeweils eine Luftreinigungseinrichtung (18a, 18b) angeordnet ist.

9. Freibelüftetes Gebäude (10) nach einem der vorstehenden Ansprüche, **gekennzeichnet durch** eine Steuerungseinrichtung (26) zum Steuern der zumindest einen Luftreinigungseinrichtung (18a, 18b), wobei die Steuerungseinrichtung (26) vorzugsweise dazu eingerichtet ist, die Luftreinigungseinrichtung (18a, 18b) auf Grundlage der ermittelten Schadstoffparameter und/oder Schadgasparameter zu steuern.

10. Freibelüftetes Gebäude (10) nach Anspruch 9,
**dadurch gekennzeichnet, dass** die Steuerungseinrichtung (26) dazu eingerichtet ist, den Elektroabscheider (20) und/oder den Filter (22) der zumindest einen Luftreinigungseinrichtung (18a, 18b), vorzugsweise auf Grundlage der ermittelten Schadstoffparameter und/oder Schadgasparameter, zum Abscheiden von Partikeln und/oder Schadgasen aus der Luft (L) zu steuern.

11. Freibelüftetes Gebäude (10) nach einem der vorstehenden Ansprüche, **gekennzeichnet durch** zumindest eine Positioniereinrichtung (28), welche dazu eingerichtet ist, die Position und/oder die Ausrichtung der Luftreinigungseinrichtung (18a, 18b) anzupassen, wobei die Positioniereinrichtung (28) vorzugsweise dazu eingerichtet ist, mittels der Steuerungseinrichtung (26) auf Grundlage der ermittelten Schadstoffparameter und/oder Schadgasparameter gesteuert zu werden.

12. Freibelüftetes Gebäude (10) nach einem der Ansprüche 9 bis 11,
**dadurch gekennzeichnet, dass**
- die Steuerungseinrichtung (26) dazu eingerichtet ist, die zumindest eine Luftreinigungseinrichtung (18a, 18b) auf Grundlage von sensorisch ermittelten und/oder simulierten Strömungsdaten zum Abscheiden von Partikeln und/oder Schadgasen aus der Luft (L) zu steuern; und/oder
- die Positioniereinrichtung (28) dazu eingerichtet ist, die Position und/oder die Ausrichtung der Luftreinigungseinrichtung (18a, 18b) auf Grundlage von sensorisch ermittelten und/oder simulierten Strömungsdaten anzupassen, wobei die Positioniereinrichtung (28) vorzugsweise dazu eingerichtet ist, mittels der Steuerungseinrichtung (26) auf Grundlage der sensorisch ermittelten und/oder simulierten Strömungsdaten gesteuert zu werden.

13. Verfahren zum Betreiben eines frei belüfteten Gebäudes (10), insbesondere eines landwirtschaftlichen Tierstalls, vorzugsweise eines freibelüfteten Gebäudes (10) nach einem der vorstehenden Ansprüche, mit dem Schritt:
- Belüften des freibelüfteten Gebäudes (10) mittels eines Gebäudebelüftungssystems (12);
**gekennzeichnet durch** den Schritt:
- Abscheiden von Partikeln und/oder Schadgasen aus Luft (L) mittels zumindest einer Luftreinigungseinrichtung (18a, 18b).

14. Verfahren nach Anspruch 13,
**gekennzeichnet durch** einen, mehrere oder sämtliche der folgenden Schritte:
- Abscheiden von Partikeln und/oder Schadgasen mittels eines Elektroabscheiders (20) der Luftreinigungseinrichtung (18a, 18b) und/oder mittels eines Filters (22) der Luftreinigungseinrichtung (18a, 18b);
- Leiten von Luft (L) zu der Luftreinigungseinrichtung (18a, 18b) mittels zumindest einer Luftleitvorrichtung;
- sensorisches Erfassen von Schadstoffparametern und/oder Schadgasparametern von Luft (L) in zumindest einem Messbereich innerhalb des Gebäudes (10) und/oder in zumindest einem Messbereich in der Umgebung (102) des Gebäudes (10) mittels zumindest einer sensorischen Messeinrichtung (24).

15. Verfahren nach Anspruch 13 oder 14,
**gekennzeichnet durch** einen, mehrere oder sämtliche der folgenden Schritte:
- Steuern der zumindest einen Luftreinigungseinrichtung (18a, 18b) und/oder des Elektroabscheiders (20) und/oder des Filters (20) der Luftreinigungseinrichtung (18a, 18b) auf Grundlage der ermittelten Schadstoffparameter und/oder Schadgasparameter mittels einer Steuerungseinrichtung (26);
- Anpassen der Position und/oder der Ausrichtung der Luftreinigungseinrichtung (18a, 18b), insbesondere Verfahren und/oder Verschwenken der Luftreinigungseinrichtung (18a, 18b), auf Grundlage der ermittelten Schadstoffparameter und/oder Schadgasparameter mittels einer Positioniereinrichtung (28);
- Steuern der zumindest einen Luftreinigungseinrichtung (18a, 18b) und/oder des Elektroabscheiders (20) und/oder des Filters (22) der Luftreinigungseinrichtung (18a, 18b) auf Grundlage von sensorisch ermittelten und/oder simulierten Strömungsdaten zum Abscheiden von Partikeln und/oder Schadgasen aus der Luft (L) mittels der Steuerungseinrichtung (26);
- Anpassen der Position und/oder der Ausrichtung der Luftreinigungseinrichtung (18a, 18b), insbesondere Verfahren und/oder Verschwenken der Luftreinigungseinrichtung (18a, 18b), auf Grundlage von sensorisch ermittelten und/oder simulierten Strömungsdaten mittels der Positioniereinrichtung (28).

16. Verfahren nach einem der Ansprüche 13 bis 15,
**gekennzeichnet durch** einen oder beide der folgenden Schritte:
- Erzeugen einer digitalen Repräsentanz (100) des frei belüfteten Gebäudes (10) mittels einer elektronischen Datenverarbeitungseinrichtung;
- Berechnen von Strömungsdaten auf Grundlage der digitalen Repräsentanz (100) mittels eines Berechnungsalgorithmus.

17. Verfahren zum Bestimmen eines Installationsortes für eine Luftreinigungseinrichtung (18a, 18b) für ein frei belüftetes Gebäude (10), insbesondere für einen frei belüfteten Tierstall, vorzugsweise für ein freibelüftetes Gebäude (10) nach einem der Ansprüche 1 bis 12, mit den Schritten:
- Erzeugen einer digitalen Repräsentanz (100) des freibelüfteten Gebäudes (10) mittels einer elektronischen Datenverarbeitungseinrichtung;
- Berechnen von Strömungsdaten auf Grundlage der digitalen Repräsentanz (100) mittels eines Berechnungsalgorithmus; und
- Ermitteln des Installationsorts für die Luftreinigungseinrichtung (18a, 18b) auf Grundlage der ermittelten Strömungsdaten.

18. Verfahren zum Erzeugen einer digitalen Repräsentanz (100) eines frei belüfteten Gebäudes (10), insbesondere eines freibelüfteten Tierstalls, vorzugsweise eines freibelüfteten Gebäudes (10) nach einem der Ansprüche 1 bis 12, mit den Schritten:
- Ermitteln von Gebäudegeometriedaten des frei belüfteten Gebäudes (10);
- Ermitteln von Gebäudebetriebsdaten des freibelüfteten Gebäudes (10);
- Berücksichtigen von Klimadaten;
- Berechnen der digitalen Repräsentanz (100) des frei belüfteten Gebäudes (10) auf Grundlage der Gebäudegeometriedaten und/oder der Gebäudebetriebsdaten und/oder der Klimadaten über einen Berechnungsalgorithmus mittels einer elektronischen Datenverarbeitungseinrichtung.
